# EUROPEAN PATENT APPLICATION

(11) **EP 4 815 163 A1**
(43) Date of publication of application: **30.09.2026**
(21) Application number: 25851713.5
(22) Date of filing: 01.07.2025
(51) Int. Cl.: H01M 50/383, H01M 10/658, H01M 50/342, H01M 50/204, H01M 50/249

(54) **BATTERY PACK AND VEHICLE INCLUDING SAME**

(30) Priority: 08.08.2024 KR 20240106362
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR)
(74) Representative: Plasseraud IP
(86) International application number: PCT/KR2025/009346
(87) International publication number: WO 2026/034805

(57) **Abstract**

The present disclosure may provide a battery pack including a plurality of cell assemblies; and a barrier unit disposed between the plurality of adjacent cell assemblies, wherein the barrier unit includes an insulating member; and a rigid member provided on at least one side of the insulating member and configured to bend at least a portion of an end thereof.

## Description

### TECHNICAL FIELD

The present disclosure relates to a battery pack and a vehicle including the same.

This application is based on and claims priority from Korean Patent Application No. 10-2024-0106362, filed on August 8, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources.

Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. When a higher output voltage is required, a plurality of battery cells may be connected in series to form a battery module or a battery pack. Additionally, in order to increase the charging and discharging capacity, a plurality of battery cells may be connected in parallel to form a battery module or a battery pack. Therefore, the number of battery cells included in the battery module or battery pack may be variously set according to the required output voltage or the charging and discharging capacity.

Meanwhile, since battery cells involve chemical reactions during charging and discharging, their performance may be degraded when used in environments above the optimal temperature, and there is a constant risk of unexpected fire or explosion when thermal control is not achieved at the optimal temperature. Additionally, the battery pack has a structure in which these battery cells are intensively accommodated inside the module frame. Therefore, if a thermal event occurs in any one battery cell, the discharged high-temperature gas and flame may be transferred to adjacent battery cells, potentially causing a chain reaction of battery cell explosions, which is very dangerous.

In particular, when multiple battery cells are included in a battery module, the high-temperature gas, flame, spark, or the like generated during thermal runaway in a specific battery cell are highly likely to be ejected toward the front and rear of the battery cells where the electrode lead of the corresponding battery module is positioned. This may cause thermal damage to components positioned at both ends of the battery module, for example, adjacent components of the end plate or busbar frame, and potentially lead to structural collapse.

Therefore, the battery pack generally attempted to partition or separate battery modules or cell assemblies by interposing a thermal barrier such as aerogel or silicone between the battery modules or between the cell assemblies. However, since this thermal barrier is vulnerable to flame and has low inherent rigidity, there is a high risk of breakage if any cell assembly explodes. Moreover, the shape of the thermal barrier was deformed by strong pressure from swelling of the cell assembly, venting gas, flame, or the like to make it difficult to suppress physical damage between cell assemblies.

Therefore, there is a need to develop a structure capable of suppressing and delaying thermal propagation so that even if a thermal event occurs in some cell assemblies within the battery pack, gas, flame, or the like may be prevented from being transferred to other cell assemblies within the battery pack to cause thermal runaway, by more reliably partitioning and separating cell assemblies.

### DISCLOSURE

### Technical Problem

Therefore, the present disclosure is directed to providing a battery pack capable of effectively preventing or delaying thermal runaway propagation between cell assemblies by reliably partitioning and separating the cell assemblies.

The present disclosure is also directed to providing a vehicle including such a battery pack.

However, technical problems to be solved by the present disclosure are not limited to the above-described problems, and other problems not mentioned herein may be clearly understood by those skilled in the art from the following description of the present disclosure.

### Technical Solution

In order to solve the above problem, the present disclosure may provide a battery pack including a plurality of cell assemblies; and a barrier unit disposed between the plurality of adjacent cell assemblies, wherein the barrier unit includes an insulating member; and a rigid member provided on at least one side of the insulating member and configured to bend at least a portion of an end thereof.

The melting point of the rigid member may be higher than the melting point of the insulating member.

The rigid member may include a body portion configured to face the cell assembly, and at least one bent portion extending from the body portion and configured to be bent in a direction toward the cell assembly.

The bent portion may be provided in plurality, and the plurality of bent portions may be configured to extend in different directions from the body portion.

The bent portion may include an upper bent portion extending upward from the body portion; and a rear bent portion extending rearward from the body portion.

The battery pack may further include a pack case configured to accommodate the plurality of cell assemblies, and the bent portion may be configured to contact the inner surface of the pack case.

The cell assembly may include a plurality of battery cells and a module case configured to accommodate the battery cells, and at least one venting hole configured to discharge venting gas generated from the battery cells to the outside may be formed on the rear surface of the module case.

The rigid member may include a left rigid member and a right rigid member provided on both sides of the insulating member, and the ends of the left rigid member and the right rigid member may be configured to be bent in different directions.

The left rigid member, the insulating member, and the right rigid member of the barrier unit may be configured to be stacked in the horizontal direction while being erected in the vertical direction.

And, the present disclosure provides a vehicle including a battery pack according to the present disclosure.

### Advantageous Effects

According to one aspect of the present disclosure, cell assemblies within a battery pack may be reliably partitioned and separated, thereby suppressing the movement of high-temperature gas, flame, or the like in the space between the cell assemblies and the pack case.

Additionally, according to the above aspect of the present disclosure, when a thermal event occurs in some cell assemblies within the battery pack, gas, flame, or the like may be prevented from colliding with the pack case and flowing back.

Therefore, according to the above aspect of the present disclosure, even if a thermal event occurs in some cell assemblies within the battery pack, gas, flame, or the like may be effectively prevented or delayed from being transferred to other cell assemblies within the battery pack to cause thermal runaway. This may ensure the safety and reliability of the battery pack.

Additionally, according to another aspect of the present disclosure, events resulting from thermal runaway in a vehicle including multiple battery packs, such as fire or explosion, may be prevented or delayed.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is a perspective view showing a state in which an upper frame is separated from a battery pack according to an embodiment of the present disclosure.
FIG. 3 is a plan view of a battery pack according to an embodiment of the present disclosure, with an upper frame separated therefrom.
FIG. 4 is a perspective view showing cell assemblies and a barrier unit according to an embodiment of the present disclosure.
FIG. 5 is a perspective view separately showing each configuration of a cell assembly and a barrier unit according to an embodiment of the present disclosure.
FIG. 6 is a perspective view showing a rigid member according to an embodiment of the present disclosure.
FIG. 7 is a plan view showing a bent portion of a rigid member according to an embodiment of the present disclosure, unfolded.
FIG. 8 is a plan view showing a bent portion of a rigid member according to another embodiment of the present disclosure, unfolded.
FIG. 9 is a cross-sectional view showing a portion of a battery pack according to an embodiment of the present disclosure.
FIG. 10 is a cross-sectional perspective view of a rigid member according to an embodiment of the present disclosure, taken along the cross-sectional line of FIG. 6.
FIG. 11 is a perspective view separately showing each configuration of a barrier unit according to another embodiment of the present disclosure.
FIG. 12 is a cross-sectional view showing a portion of a battery pack according to another embodiment of the present disclosure.
FIG. 13 is a perspective view separately showing each configuration of a barrier unit according to still another embodiment of the present disclosure.
FIG. 14 is a cross-sectional view showing a portion of a battery pack according to still another embodiment of the present disclosure.
FIG. 15 is a cross-sectional view showing a portion of a battery pack according to another embodiment of the present disclosure, different from that of FIG. 14.
FIG. 16 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Throughout the specification, when referring to "A and/or B", it may mean A, B or A and B, unless expressly stated to the contrary.

Meanwhile, in this specification, unless otherwise specified, the X-axis direction in which multiple battery cells 110 are stacked is referred to as the left-right direction, the Y-axis direction, which is a horizontal direction orthogonal to this cell stacking direction, is referred to as the front-back direction, and the Z-axis direction orthogonal to the X-Y plane is referred to as the upper-lower direction (vertical direction). Moreover, the Y-axis direction may be referred to as the length direction of the cell in the case of pouch-type cells. Additionally, the left-right direction, the front-back direction, and the upper-lower direction may be expressed as the first direction, the second direction, and the third direction, respectively.

Meanwhile, terms indicating directions such as upper, lower, left, right, front, and rear may be used in the present disclosure, but these terms are only for convenience of description, and it is obvious to those skilled in the art that the terms may vary depending on the position, arrangement, or rotation of a reference object, or the position of an observer.

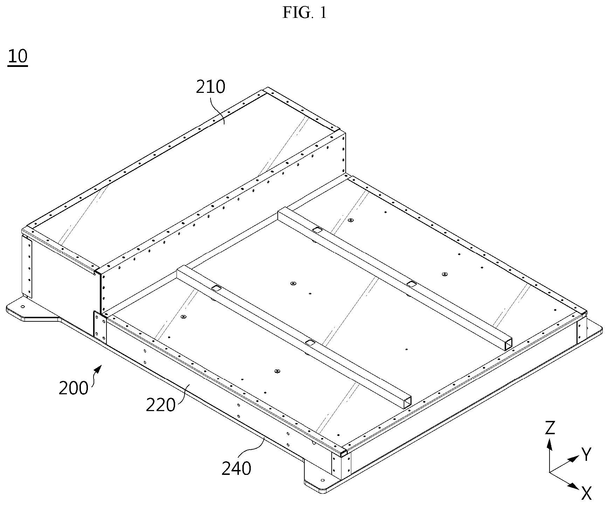

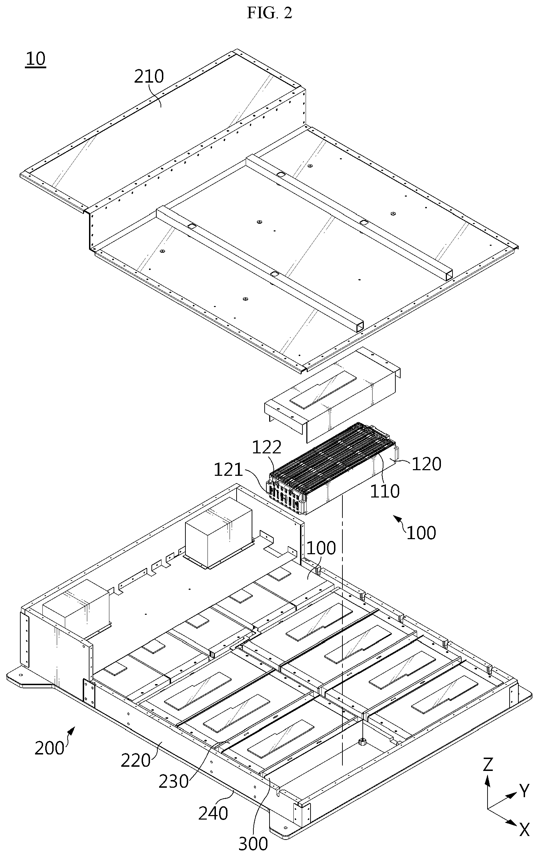

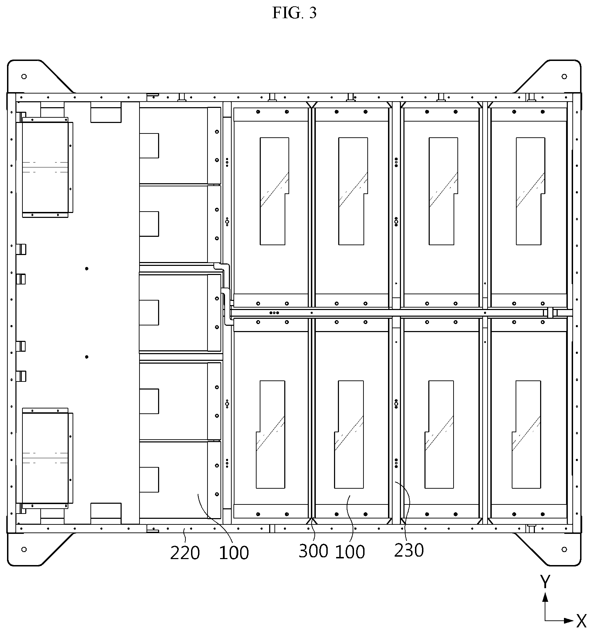

FIG. 1 is a perspective view of a battery pack 10 according to an embodiment of the present disclosure. FIG. 2 is a perspective view showing a state in which an upper frame 210 is separated from a battery pack 10 according to an embodiment of the present disclosure. FIG. 3 is a plan view of a battery pack 10 according to an embodiment of the present disclosure, with an upper frame 210 separated therefrom.

Referring to FIGS. 1 to 3, a battery pack 10 according to an embodiment of the present disclosure may include a cell assembly 100, a pack case 200, and a barrier unit 300.

Referring to FIG. 2, the cell assembly 100 may include a battery cell 110 and a module case 120. At this time, according to an embodiment, the cell assembly 100 may be defined as a battery module.

The battery cell 110 may have various types. For example, the battery cell 110 may include at least one of a pouch-type battery cell, a cylindrical battery cell, and a prismatic battery cell. However, for convenience of description, the following description will focus on the case where the battery cell 110 is a pouch-type battery cell.

The battery cell 110 may be provided in plurality. The plurality of battery cells 110 may be stacked on each other. The battery cell 110 may have various structures, and the plurality of battery cells 110 may be stacked in various ways.

The battery cell 110 may have a structure in which a plurality of unit cells arranged in the order of a positive electrode plate, a separator, and a negative electrode plate, or a plurality of bi-cells arranged in the order of a positive electrode plate, a separator, a negative electrode plate, a separator, a positive electrode plate, a separator, and a negative electrode plate are stacked according to the battery capacity.

An electrode lead (not shown) may be provided in the battery cell 110. The electrode lead is a type of terminal exposed to the outside and connected to an external device, and may be made of a conductive material. The electrode lead may include a positive electrode lead and a negative electrode lead.

The positive electrode lead and the negative electrode lead may be disposed in opposite directions with respect to the length direction (Y-axis direction) of the battery cell 110, or the positive electrode lead and the negative electrode lead may be positioned in the same direction with respect to the length direction of the battery cell 110.

The battery cell 110 may be accommodated in a module case 120, and the module case 120 accommodating the battery cell 110 may be accommodated in a pack case 200 to configure a battery pack 10. However, the present disclosure is not limited thereto, and the module case 120 may be removed to reduce the weight and volume of the module case 120, in which case, the battery cell 110 may be directly accommodated in the pack case 200 of the battery pack 10.

According to this method, the battery cells 110 may be further accommodated in the space previously occupied by the module case 120 of the cell assembly 100 within the battery pack 10, so that there is an effect of increasing space efficiency and enhancing battery capacity.

Here, a cell cover (not shown) supporting the battery cells 110 may be provided so that the battery cells 110 may be directly accommodated in the pack case 200. The cell cover may have various shapes, for example, may be configured in an 'n' shape, 'u' shape, or '⊏' shape surrounding at least three surfaces of one battery cell 110. However, the present disclosure is not limited thereto.

However, for convenience of description, the following description will focus on a case where a module case 120 is provided and battery cells 110 are accommodated in the module case 120. That is, the description will focus on an embodiment where a cell assembly 100 is accommodated in a battery pack 10.

A plurality of battery cells 110 may be stacked and accommodated in the module case 120. The module case 120 surrounds the plurality of battery cells 110, thereby protecting the battery cells 110 from external vibrations or impacts.

The module case 120 may be formed in a shape corresponding to the shape of the cell assembly 100 in which the plurality of battery cells 110 are stacked. For example, when the cell assembly 100 in which the plurality of battery cells 110 are stacked is formed in a hexahedral shape, the module case 120 may also be formed in a hexahedral shape to correspond thereto. However, the present disclosure is not limited thereto. Here, the module case 120 may include an upper (+Z-axis direction) module case, a lower (-Z-axis direction) module case, a left side (-X-axis direction) module case, a right side (+X-axis direction) module case, a front (+Y-axis direction) module case, and a rear (-Y-axis direction) module case 121. Here, at least some of these may be formed integrally.

According to an embodiment, the rear module case 121 may include at least one venting hole 122. At least one venting hole 122 configured to discharge venting gas generated in the battery cell 110 to the outside of the cell assembly 100 may be formed on the rear of the module case 120 (e.g., the rear module case 121).

According to the above embodiment of the present disclosure, when thermal runaway occurs in the cell assembly 100, gas or flame generated inside the cell assembly 100 may be discharged to the outside of the cell assembly 100 through the venting hole 122. Specifically, directional venting may be induced toward the rear (-Y-axis direction) of the cell assembly 100.

Additionally, the module case 120 may be manufactured, for example, by bending a metal plate, and accordingly, the module case 120 may be manufactured as an integrated unit including an upper module case, a lower module case, a left side module case, a right side module case, a front module case, and a rear module case 121. When the module case 120 is manufactured as an integrated unit, the coupling process may be made easier and simplified. Alternatively, the upper module case, the lower module case, the left side module case, the right side module case, the front module case, and the rear module case 121 of the module case 120 may be provided separately and coupled by welding or the like. However, the material of the module case 120 is not limited to a metal material.

The pack case 200 may be configured to accommodate a plurality of cell assemblies 100. Referring to FIG. 2, a plurality of cell assemblies 100 may be accommodated in the pack case 200. In FIG. 2, a plurality of battery cells 110 may be accommodated in the module case 120, and a plurality of cell assemblies 100 may be accommodated in the pack case 200.

The pack case 200 may be configured to include, for example, an upper frame 210, a side frame 220, a partition wall frame 230, and a lower frame 240.

Referring to FIGS. 1 and 2, the upper frame 210 may be coupled to the side frame 220. In a modified embodiment, the upper frame 210 may be formed integrally with the side frame 220, but is not limited thereto. The upper frame 210 may be formed in various shapes, and as shown in FIGS. 1 and 2, it may be formed in a bent shape to form a step in the Z-axis direction. However, the present disclosure is not limited thereto.

The side frame 220 may be configured to extend upward from the edge of the lower frame 240. The side frame 220 defines the height of the pack case 200, and may form a preset space between the side frame 220 and the lower frame 240. And, a plurality of cell assemblies 100 may be seated in the space between the side frame 220 and the lower frame 240.

Referring to FIGS. 2 and 3, the partition wall frame 230 is coupled to the lower frame 240. And, the partition wall frame 230 may be provided in plurality, and at least one cell assembly 100 may be disposed between the partition wall frames 230. That is, the partition wall frame 230 may be interposed between the cell assemblies 100. However, the partition wall frame 230 may not be provided according to an embodiment.

A plurality of cell assemblies 100 may be configured to be seated on the lower frame 240. The lower frame 240 may be formed in a rectangular plate shape, but is not limited thereto. The lower frame 240 may form the bottom of the pack case 200.

And, the battery pack 10 according to the present embodiment may include, for example, a control module configured to control the charging and discharging of the pouch-type battery cell 110. This control module may include, for example, a battery management system (BMS) and a battery disconnect unit, and may be accommodated inside the pack case 200 together with the battery cell 110.

Referring to FIGS. 2 and 3, a barrier unit 300 may be disposed between a plurality of adjacent cell assemblies 100. The barrier unit 300 may be disposed between side surfaces (e.g., a left side surface, a right side surface) of the plurality of cell assemblies 100. The barrier unit 300 may be disposed to face the side surface of the cell assembly 100. The barrier unit 300 may be in direct contact with the side surface of the cell assembly 100.

In particular, at least one barrier unit 300 may be included in one battery pack 10. A plurality of barrier units 300 may be provided along one direction (X-axis direction and/or Y-axis direction) in which the plurality of cell assemblies 100 are arranged. The barrier unit 300 may be provided in a form of being disposed for at least one cell assembly 100.

In particular, the barrier unit 300 may be configured to partition between the plurality of cell assemblies 100. The barrier unit 300 may be configured to group the plurality of cell assemblies 100. For example, the barrier unit 300 may be disposed for every two cell assemblies 100, thereby grouping the cell assemblies 100 in pairs.

According to the above embodiment of the present disclosure, the barrier unit 300 may prevent and/or delay heat transfer between adjacent cell assemblies 100. Even if a thermal event occurs in an adjacent cell assembly 100, the barrier unit 300 may suppress and/or delay the movement of venting gas, flame, and/or particles to another adjacent cell assembly 100. That is, thermal runaway propagation between cell assemblies 100 may be effectively prevented or delayed. Therefore, the safety and reliability of the battery pack 10 may be ensured.

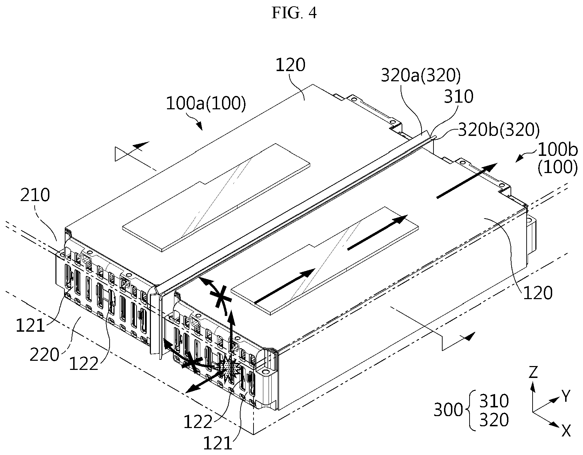

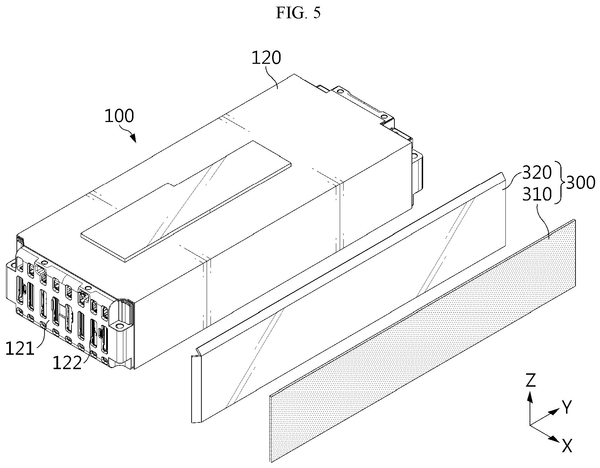

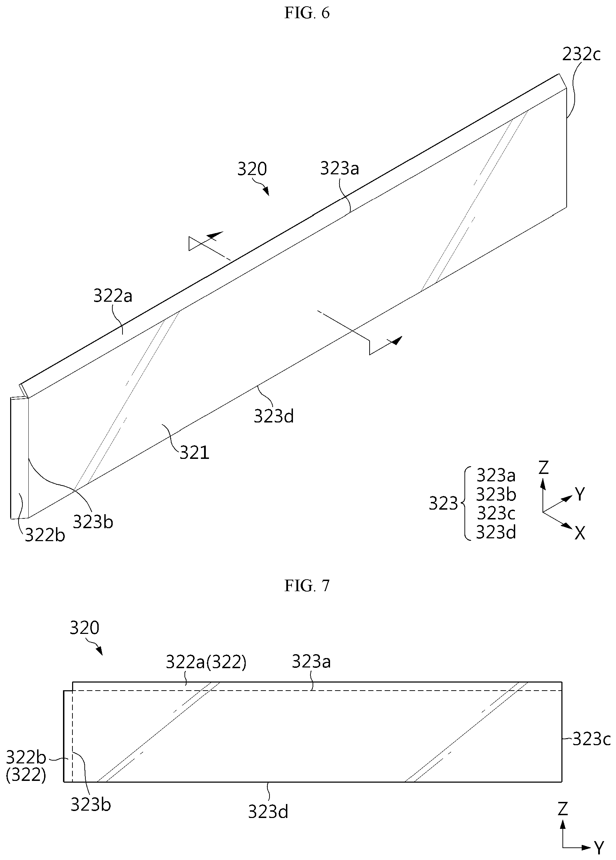

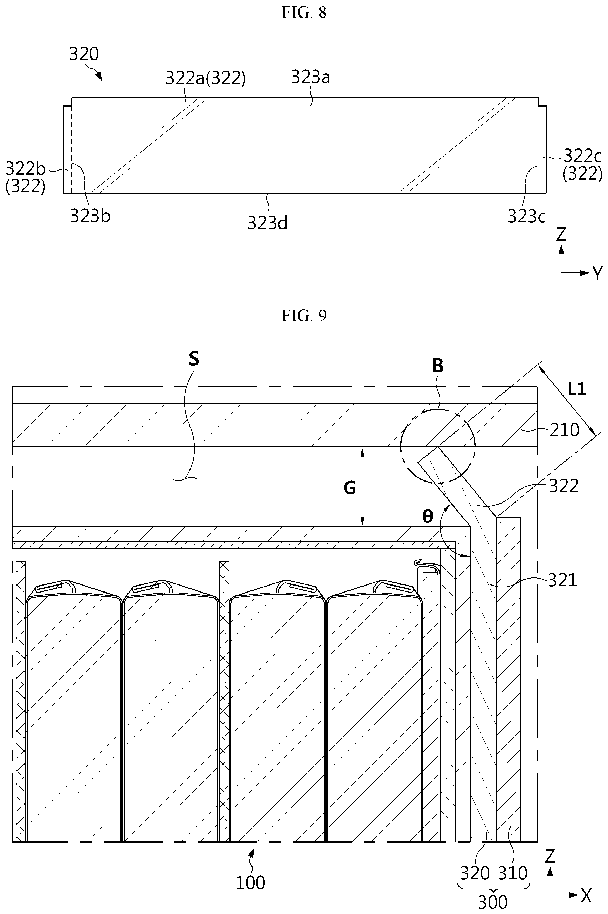

FIG. 4 is a perspective view showing cell assemblies 100 and a barrier unit 300 according to an embodiment of the present disclosure. FIG. 5 is a perspective view separately showing each configuration of a cell assembly 100 and a barrier unit 300 according to an embodiment of the present disclosure. FIG. 6 is a perspective view showing a rigid member 320 according to an embodiment of the present disclosure. FIG. 7 is a plan view showing a bent portion of a rigid member 320 according to an embodiment of the present disclosure, unfolded. FIG. 8 is a plan view showing a bent portion of a rigid member 320 according to another embodiment of the present disclosure, unfolded.

More specifically, the barrier unit 300 may include an insulating member 310 and a rigid member 320. The insulating member 310 may be provided between the plurality of cell assemblies 100. This insulating member 310 may be configured to block heat generated when a thermal event occurs inside the battery pack 10. For example, the insulating member 310 may be provided as an insulating pad thinner than the battery cell 110. Additionally, the insulating pad may include a compressive pad form, for example, a material such as silicone or aerogel.

The shape and/or size of the insulating member 310 may be substantially the same as the shape and/or size of one side surface (a left side surface, a right side surface) of the cell assembly 100. For example, the shape of the insulating member 310 may be a plate having a height smaller than its width and length. However, the shape of the insulating member 310 is not limited by the above embodiment, and may be designed and modified in various ways.

The rigid member 320 may protect adjacent cell assemblies 100 from physical damage and impact caused by the ignition pressure and swelling of the cell assembly 100 serving as a trigger.

The rigid member 320 may be disposed adjacent to the insulating member 310. The rigid member 320 may be provided on at least one side of the insulating member 310. That is, the rigid member 320 may be disposed between the cell assembly 100 and the insulating member 310. One surface of the rigid member 320 may be disposed to directly face one surface of the insulating member 310. The rigid member 320 may be provided on only one side of the insulating member 310 or on both sides thereof.

The rigid member 320 may be in contact with the insulating member 310. For example, an adhesive member (not shown) such as an adhesive tape or the like may be included between the rigid member 320 and the insulating member 310. For example, a bonding member for joining dissimilar materials may be included between the rigid member 320 and the insulating member 310.

The rigid member 320 may be configured to protect the insulating member 310 from the outside of the insulating member 310. The rigid member 320 may include a material with high structural rigidity. Therefore, even if a thermal event occurs, the structure of the barrier unit 300 may be maintained, and physical damage to the adjacent cell assembly 100 may be prevented and/or delayed. This may structurally restrict high-temperature electrode discharge, flame, or the like generated by the thermal event from moving to the adjacent cell assembly 100.

Additionally, the rigid member 320 may be made of a material with superior heat resistance and/or fire resistance compared to the insulating member 310. The rigid member 320 with high structural rigidity and thermal conductivity may suppress thermal/physical damage to adjacent cell assemblies 100. Thermal damage refers to impacts on adjacent cell assemblies 100 due to heat conduction or convection. Physical damage refers to impacts on adjacent cell assemblies 100 due to electrode discharge or flame.

The rigid member 320 may be made of a material with a higher melting point than the insulating member 310. The melting point of the rigid member 320 may be, for example, approximately 1,400 degrees Celsius or higher. For example, the rigid member 320 may include a stainless steel (SUS) material. Accordingly, the rigid member 320 maintains its structure even under high heat and high pressure to prevent damage or breakage of the insulating member 310, thereby maintaining the insulating performance. For example, even if an aerogel with excellent insulating performance is applied to the insulating member 310, the aerogel will carbonize and disappear if directly exposed to flame. The rigid member 320 with a high melting point prevents the insulating member 310 from being exposed to flame, which may prevent the flame from affecting the insulating member 310, and may assist the insulating member 310 in demonstrating its pure insulating effect.

The rigid member 320 may include a material with high thermal conductivity. Therefore, even if a thermal event occurs, heat may be rapidly dispersed across the entire area of the rigid member 320. This reduces the temperature difference for each part of the rigid member 320 and also disperses heat conducted to adjacent cell assemblies 100, thereby preventing localized thermal damage to the cell assembly 100. This is because while a phenomenon in which the temperature of the cell assembly 100 rises causes thermal damage, the temperature difference may also adversely affect the cell assembly 100.

Additionally, even if a thermal event occurs in an adjacent cell assembly 100, the rigid member 320 may suppress or delay heat conduction to other cell assemblies 100 or the generation of heat convection. Moreover, the rigid member 320 may protect the insulating member 310 that is relatively vulnerable to heat in order not to lose the function thereof due to heat.

The rigid member 320 may be configured such that at least a portion of the end is bent. Specifically, the rigid member 320 may include a body portion 321 and a bent portion 322. The body portion 321 may be configured to face the cell assembly 100.

Referring to FIG. 5, the shape and/or size of the body portion 321 may be substantially the same as the shape and/or size of one side surface (a left side surface, a right side surface) of the facing cell assembly 100.

The body portion 321 may have a plate shape being erected in the vertical direction (Z-axis direction). It may be a plate-shaped member covering the facing portion between the cell assemblies 100 along the length direction (Y-axis direction) of the cell assembly 100.

The bent portion 322 may be a portion extending from the body portion 321 and bent to be inclined at a specified bending angle (the bending angle (θ) of FIG. 9) from the body portion 321.

According to the above embodiment of the present disclosure, it may be configured to suppress the movement of venting gas, flame, or the like between adjacent cell assemblies 100. Referring to the bold arrows illustrated in FIG. 4, even if a thermal event occurs in the cell assembly 100 (the right cell assembly 100b positioned in the +X-axis direction in FIG. 4) provided on one side of the rigid member 320, it may be configured to suppress the movement of venting gas, flame, or the like beyond the bent portion 322 of the rigid member 320 to the adjacent cell assembly 100 (the left cell assembly 100a positioned in the -X-axis direction in FIG. 4). Additionally, the bent portion 322 may be configured to guide the venting gas, flame, or the like to move only toward the cell assembly 100 provided on one side of the rigid member 320.

According to the above embodiment of the present disclosure, the cell assemblies 100 may be reliably partitioned and separated by the bent shape of the rigid member 320. In particular, when a thermal event occurs in any one cell assembly 100, the bent portion 322 may suppress the transfer of high-temperature venting gas, flame, or the like to another adjacent cell assembly 100 along the stacking direction (X-axis direction) of the cell assemblies 100 (see the bold X arrow in FIG. 4). Therefore, since thermal runaway propagation between the cell assemblies 100 may be effectively prevented or delayed, the safety and reliability of the battery pack 10 may be ensured.

The bent portion 322 may be configured to be bent in a direction toward the cell assembly 100. The bent portion 322 may extend from the edge of the body portion 321, and may be bent in a direction toward an adjacent cell assembly 100. In other words, the bent portion 322 may be configured to be bent in a direction away from the insulating member 310.

According to the above embodiment of the present disclosure, it is possible to further prevent venting gas, flame, or the like from being directed beyond the rigid member 320 to the adjacent cell assembly 100. Additionally, by preventing venting gas, flame, or the like from being directed to the insulating member 310, damage or breakage of the insulating member 310 may be further suppressed.

Referring to FIGS. 6 and 7, the bent portion 322 may be configured in plurality. The plurality of bent portions 322 may extend in different directions from the body portion 321. For example, the bent portion 322 may extend upward (+Z-axis direction) and/or rearward (-Y-axis direction) from the body portion 321. That is, the bent portion 322 may include an upper bent portion 322a extending upward from the body portion 321, and a rear bent portion 322b extending rearward from the body portion 321.

At least a portion of the edge 323 of the body portion 321 may be a boundary surface between the bent portion 322 and the body portion 321. The body portion 321 may include a first edge 323a facing upward (+Z-axis direction), a second edge 323b facing rearward (-Y-axis direction), a third edge 323c facing forward (+Y-axis direction), and a fourth edge 323d facing downward (-Z-axis direction).

The upper bent portion 322a may extend upward from the first edge 323a of the body portion 321. The rear bent portion 322b may extend rearward from the second edge 323b of the body portion 321.

The venting gas, spark, or the like discharged through the venting hole 122 of the cell assembly 100 is directionally vented in the rear direction. According to the above embodiment of the present disclosure, the rear bent portion 322b may suppress the venting gas or flame vented rearward from being directed to the adjacent cell assembly 100.

Additionally, the venting gas, spark, or the like discharged from the cell assembly 100 is in a high temperatures state, and may exhibit a strong tendency to move upward. According to the above embodiment of the present disclosure, the upper bent portion 322a ensures that the flame or spark with strong straightness necessarily collide with the upper bent portion 322a, thereby allowing the flow direction of the venting gas or the like to be bent. Therefore, according to the above embodiment of the present disclosure, the movement of the venting gas or the like toward the adjacent cell assembly 100 may be more reliably suppressed.

In this way, according to the present disclosure, in the cell assembly 100 vented rearward, the rear bent portion 322b prevents damage that can be done to adjacent left and right cell assemblies 100 through the collapsed part, caused by high-temperature discharge, flame, or the like generated by an event collapsing the rear part of the cell assembly 100. Additionally, the upper bent portion 322a suppresses the path where high-temperature gas discharged from the rear of the triggering cell assembly 100 directly moves to the upper end of the adjacent cell assembly 100.

Referring to FIG. 8, the bent portion 322 may further include a front bent portion 322c. The front bent portion 322c may be a portion extending forward (+Y-axis direction) from the body portion 321. The front bent portion 322c may be a portion bent to extend forward from the third edge 323c of the body portion 321.

When a thermal event occurs in the cell assembly 100, even if directional venting is induced rearward, the venting gas or the like vented rearward may move upward and ultimately, may not be prevented from moving forward. According to the above embodiment of the present disclosure, the vented venting gas or the like may be prevented from moving toward the adjacent cell assembly 100 from the front side.

In this way, a plurality of bent portions 322 (e.g., the upper bent portion 322a, the rear bent portion 322b, and the front bent portion 322c) are formed in the rigid member 320, and all of the plurality of bent portions 322 may be bent in a direction toward the cell assembly 100. Hereinafter, for convenience of description, the upper bent portion 322a is used as the reference, but this description may also be applied to the rear bent portion 322b and front bent portion 322c.

Meanwhile, considering assembly convenience or assembly tolerance, the insulating member 310 may be configured to be spaced apart from the inner surface of the pack case 200 by a predetermined gap. At this time, the rigid member 320 may be provided to extend vertically further than the insulating member 310. That is, the vertical height of the rigid member 320 may be provided longer than the vertical height of the insulating member 310.

In this case, if a thermal event occurs in any one cell assembly 100, there is a concern that venting gas, flame, or the like may be transferred to another adjacent cell assembly 100 through a certain gap formed between the insulating member 310 and the pack case 200. Accordingly, there is a possibility that a gap is formed between the insulating member 310 and the pack case 200, and venting gas or the like may be transferred to another adjacent cell assembly 100 through the gap. Accordingly, according to the present disclosure, the bent portion 322 of the rigid member 320 may be configured to be in contact with the pack case 200. This will be described below.

FIG. 9 is a cross-sectional view showing a portion of a battery pack 10 according to an embodiment of the present disclosure.

Referring to the part indicated by B in FIG. 9, the end of the bent portion 322 may directly contact the inner surface of the pack case 200. That is, the bent portion 322 of the rigid member 320 may be configured to be supported by the inner surface of the pack case 200. The bent portion 322 may be disposed in the separation space S between the pack case 200 and the cell assembly 100.

According to the above embodiment of the present disclosure, since there is no or minimal gap between the rigid member 320 and the pack case 200, it is possible to reliably partition and separate adjacent cell assemblies 100. This may prevent thermal runaway propagation to other adjacent cell assemblies 100.

And, by applying a rigid member 320 with a left/right/upper bending shape, the bent portion may be pressed by the pack case 200 to enable complete contact even if the deviation due to the size of the rigid member 320 is less considered, and this is also advantageous for assembly. Additionally, due to this complete contact, the rigid member 320 functions as a partition wall that completely separates neighboring cell assemblies 100 within the pack case 200. Therefore, both the rearward and upward movement of high-temperature discharge generated from the triggering cell assembly 100 and the external reverse inflow may be structurally restricted, thereby suppressing the impact on adjacent cell assemblies 100.

Additionally, according to the above embodiment of the present disclosure, the bent portion 322 is supported by the pack case 200, thereby preventing the rigid member 320 from being pushed toward the adjacent cell assembly 100 by high pressure from venting gas, flame, or the like. Accordingly, even if a thermal event occurs, the possibility of the rigid member 320 being deformed by high-temperature, high-pressure venting gas, flame, or the like to allow the venting gas, flame, or the like to be transferred to other cell assemblies 100 may be minimized.

Moreover, the bent portion 322 may guide the venting gas, flame, or the like so as not to move beyond the cell assembly 100 and be directed to the adjacent cell assembly 100.

In this way, the rigid member 320 including the bent portion 322 may impose structural restricts on high-temperature electrode discharge, flame, or the like generated from the triggering cell assembly 100, thereby suppressing their impact on the adjacent cell assembly 100. In addition, after an event occurs, the path where high-temperature gas moving toward the upper end of the cell assembly 100 directly moves to the upper end of the adjacent cell assembly 100 may be restricted.

When the battery pack 10 is viewed from the front or rear, the bent portion 322 may be configured in a diagonal shape. For example, the bent portion 322 may be configured to be inclined upward. As in the embodiment illustrated in FIG. 9, the bending angle (θ) formed by the body portion 321 and the bent portion 322 of the rigid member 320 may be configured as an obtuse angle. For example, the bending angle (θ) may be greater than 90 degrees and less than or equal to 180 degrees. Accordingly, the bent portion 322 may be interposed on the upper part of the cell assembly 100 provided on one side of the rigid member 320. The bending angle (θ) may be determined by the length L1 of the bent portion 322 and the separation distance G between the inner surface of the pack case 200 and the cell assembly 100. At this time, the length L1 of the bent portion 322 may be substantially equal to or longer than the separation distance G between the inner surface of the pack case 200 and the cell assembly 100.

According to the above embodiment of the present disclosure, a separation space S may be formed between the pack case 200 and the cell assembly 100. Generally, venting gas, flame, or the like may move through the separation space S, and the bent portion 322 may be disposed in the separation space S to prevent them from moving to the adjacent cell assembly 100.

When the rigid member 320 is not bent but manufactured in a flat plate shape, a tolerance is likely to occur between the size of the rigid member 320 and the size of the pack case 200, and in this case, it may be difficult for the rigid member 320 to completely separate the separation space S and thus completely block the venting gas, flame, or the like generated by a thermal event. According to the above embodiment of the present disclosure, the end of the rigid member 320 is bent, and the bent portion 322 is in contact with the inner surface of the pack case 200, thereby facilitating assembly and manufacturing while more effectively blocking flame or the like.

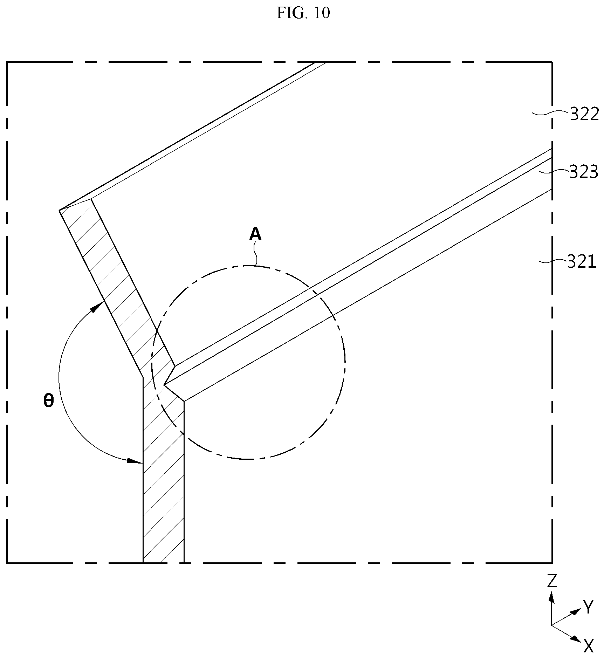

FIG. 10 is a cross-sectional perspective view of a rigid member 320 according to an embodiment of the present disclosure, taken along the cross-sectional line of FIG. 6.

A portion of the edge of the body portion 321 (e.g., the first edge 323a, the second edge 323b) may be thinner or have a lower density than the surrounding area, making it easier to be bent than the surrounding area.

The rigid member 320 may be manufactured by molding one plate. The rigid member 320 may bend a portion of one plate. For example, referring to the part indicated by A in FIG. 10, the edge of the body portion 321 (e.g., the first edge 323a, the second edge 323b) may be lightly cut from one plate. That is, only a portion of the edge may be cut to form the edge thinner than the surrounding area.

At this time, for example, when bending the rigid member 320 to the left, a cut may be made on the right surface of the rigid member 320. Additionally, when bending the rigid member 320 to the right, a cut may be made on the left surface of the rigid member 320. However, the method for manufacturing the rigid member 320 is not limited to the above embodiment, and may be designed and modified in various ways.

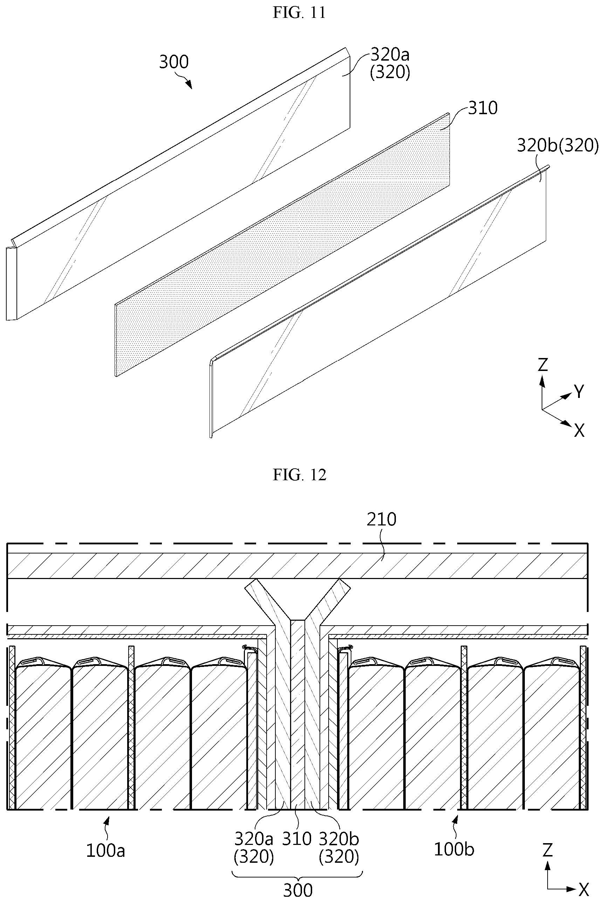

FIG. 11 is a perspective view separately showing each configuration of a barrier unit 300 according to another embodiment of the present disclosure. FIG. 12 is a cross-sectional view showing a portion of a battery pack 10 according to another embodiment of the present disclosure.

The rigid member 320 may be provided on both sides of the insulating member 310. The rigid member 320 may include a left rigid member 320a and a right rigid member 320b.

The barrier unit 300 may be positioned between the left cell assembly 100a disposed on the left side of the barrier unit 300 and the right cell assembly 100b disposed on the right side of the barrier unit 300. At this time, the left rigid member 320a may be disposed between the left cell assembly 100a and the insulating member 310. Additionally, the right rigid member 320b may be disposed between the right cell assembly 100b and the insulating member 310.

In other words, the left rigid member 320a, the insulating member 310, and the right rigid member 320b may be sequentially arranged. That is, it may be like a sandwich structure in which the rigid members 320 are disposed on both sides with the heat insulating member 310 at the center. The left rigid member 320a, the insulating member 310, and the right rigid member 320b of the barrier unit 300 may be configured to be stacked in the horizontal direction (e.g., X-axis direction) while being erected in the vertical direction.

The ends of the left rigid member 320a and the right rigid member 320b may be bent in different directions. The bent portions 322 (ends) of the left rigid member 320a and the right rigid member 320b provided on both sides of the insulating member 310 may be configured to be bent in directions away from each other from the insulating member 310. The bent portions 322 of the rigid member 320 may each be configured to face the facing cell assemblies 100. Moreover, referring to FIG. 12, the left rigid member 320a and the right rigid member 320b may be configured to be symmetrical to each other based on the insulating member 310.

According to the above embodiment of the present disclosure, each cell assembly 100 may be reliably partitioned and separated by the rigid members 320 provided on both sides of the cell assembly 100. Accordingly, even if a thermal event occurs in the cell assembly 100, the movement of high-temperature venting gas, flame, or the like along the stacking direction of the cell assemblies 100 in the separation space S between the cell assemblies 100 and the pack case 200 may be further suppressed. The bending direction of each rigid member 320 is configured toward the cell assembly 100 closest to each rigid member 320, so that rigid member 320 may perform its function regardless of which cell assembly 100 is ignited.

Therefore, according to the above embodiment of the present disclosure, thermal runaway between the cell assemblies 100 within the battery pack 10 may be effectively prevented or delayed. That is, the rigid members 320 provided on both sides of the cell assembly 100 may protect the insulating member 310, maximize the insulating performance of the insulating member 310, and simultaneously block the movement of venting gas, flame, or the like.

According to an embodiment, the left rigid member 320a, the insulating member 310, and the right rigid member 320b of the barrier unit 300 are coupled and/or fixed to each other by an adhesive or the like, and may be assembled between the left cell assembly 100a and the right cell assembly 100b as a single unit.

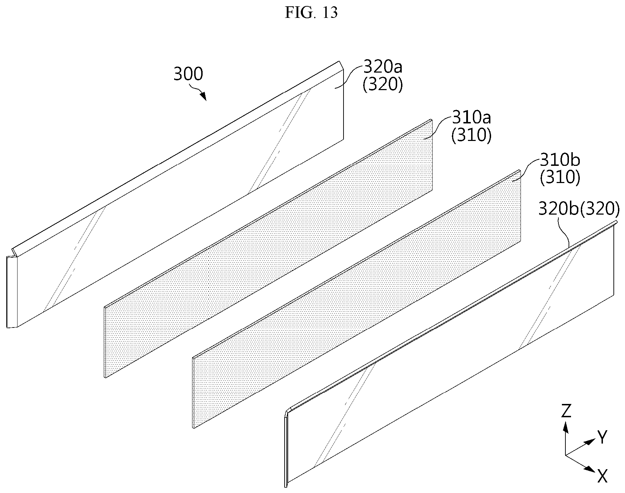

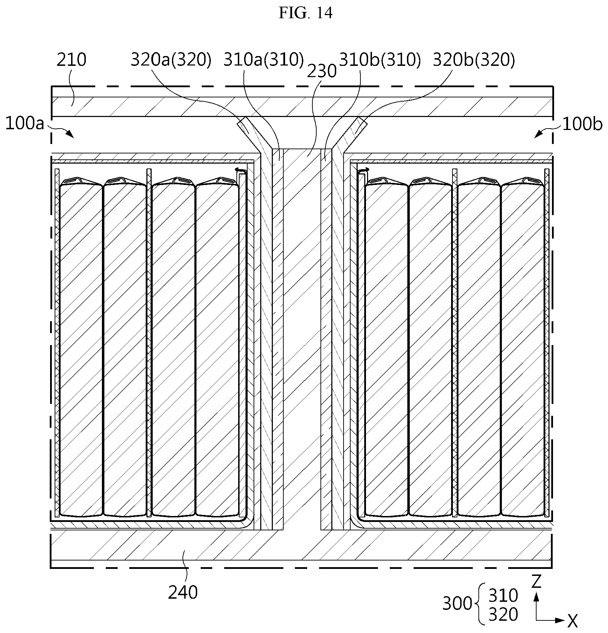

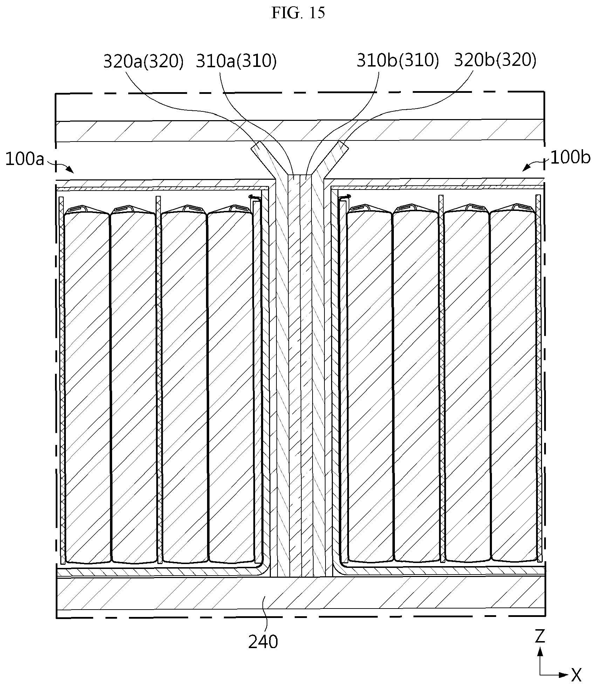

FIG. 13 is a perspective view separately showing each configuration of a barrier unit 300 according to still another embodiment of the present disclosure. FIG. 14 is a cross-sectional view showing a portion of a battery pack 10 according to still another embodiment of the present disclosure. FIG. 15 is a cross-sectional view showing a portion of a battery pack 10 according to another embodiment of the present disclosure, different from that of FIG. 14.

According to an embodiment, the insulating member 310 may include a left insulating member 310a and a right insulating member 310b. That is, the barrier unit 300 may be arranged in parallel in the order of a left rigid member 320a, a left insulating member 310a, a right insulating member 310b, and a right rigid member 320b.

The left rigid member 320a and the left insulating member 310a may be attached to the right side surface of the left cell assembly 100a. The right rigid member 320b and the right insulating member 310b may be attached to the left side surface of the right cell assembly 100b. In this way, the rigid member 320 and the insulating member 310 may be coupled and/or attached to the side surfaces of adjacent battery modules, respectively.

According to the above embodiment of the present disclosure, since the assembly of the rigid member 320 and the insulating member 310 is assembled as a single unit with the cell assembly 100, the process of attaching the barrier unit 300 between the cell assemblies 100 may be omitted, thereby facilitating assembly and arrangement.

Referring to FIG. 14, the left insulating member 310a and the right insulating member 310b may be disposed to face each other. According to an embodiment, when a partition wall frame 230 is disposed between adjacent cell assemblies 100, the left insulating member 310a and the right insulating member 310b may be disposed to be spaced apart from each other with the partition wall frame 230 interposed therebetween. That is, the partition wall frame 230 may be disposed between the left insulating member 310a and the right insulating member 310b. The barrier units 300 may be disposed separately on both sides based on the partition wall frame 230.

According to the above embodiment of the present disclosure, a separation distance may be created between the barrier units 300 separated on both sides based on the partition wall frame 230, thereby more effectively delaying and/or blocking the movement of venting gas, flame, or the like when a thermal event occurs.

Referring to FIG. 15, the left insulation member 310a and the right insulation member 310b may directly face and/or contact each other. The present embodiment may be applied when the partition wall frame 230 is not provided between the cell assemblies 100. At this time, the barrier unit 300 may simultaneously perform the function of the partition wall frame 230.

According to the above embodiment of the present disclosure, the partition wall frame 230 may be omitted between the cell assemblies 100, and the barrier unit 300 may be disposed in place of the partition wall frame 230. In this case, the energy density of the battery pack 10 may be increased, and the weight of the battery pack 10 may be reduced.

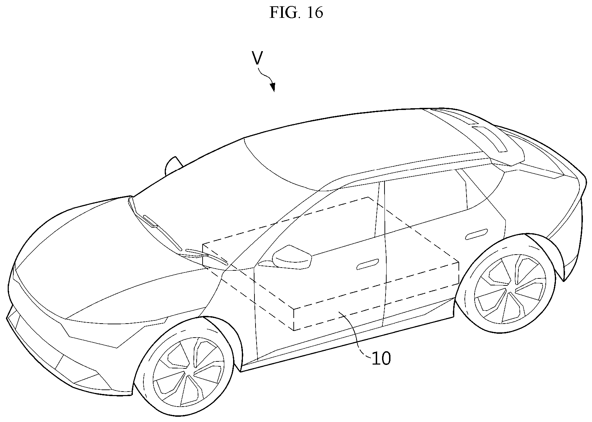

FIG. 16 is a schematic perspective view of a vehicle V including a battery pack 10 according to an embodiment of the present disclosure.

Referring to FIG. 16, a vehicle V according to an embodiment of the present disclosure may include a battery pack 10 according to an embodiment of the present disclosure. The vehicle V according to the present disclosure may be, for example, an electric vehicle, a hybrid vehicle, or a plug-in hybrid vehicle. The vehicle V includes a four-wheeled vehicle and a two-wheeled vehicle. The vehicle V may operate by receiving power from the battery pack 10 according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery pack comprising:
a plurality of cell assemblies; and
a barrier unit disposed between the plurality of adjacent cell assemblies,
wherein the barrier unit comprises:
an insulating member; and
a rigid member provided on at least one side of the insulating member and configured to bend at least a portion of an end thereof.

2. The battery pack according to claim 1,
wherein the melting point of the rigid member is higher than the melting point of the insulating member.

3. The battery pack according to claim 1,
wherein the rigid member comprises a body portion configured to face the cell assembly, and at least one bent portion extending from the body portion and configured to be bent in a direction toward the cell assembly.

4. The battery pack according to claim 3,
wherein the bent portion is provided in plurality, and
wherein the plurality of bent portions are configured to extend in different directions from the body portion.

5. The battery pack according to claim 3,
wherein the bent portion comprises:
an upper bent portion extending upward from the body portion; and
a rear bent portion extending rearward from the body portion.

6. The battery pack according to claim 3, further comprising:
a pack case configured to accommodate the plurality of cell assemblies,
wherein the bent portion is configured to contact the inner surface of the pack case.

7. The battery pack according to claim 1,
wherein the cell assembly comprises a plurality of battery cells and a module case configured to accommodate the battery cells, and
wherein at least one venting hole configured to discharge venting gas generated from the battery cells to the outside is formed on the rear surface of the module case.

8. The battery pack according to claim 1,
wherein the rigid member comprises a left rigid member and a right rigid member provided on both sides of the insulating member, and
wherein the ends of the left rigid member and the right rigid member are configured to be bent in different directions.

9. The battery pack according to claim 8,
wherein the left rigid member, the insulating member, and the right rigid member of the barrier unit are configured to be stacked in the horizontal direction while being erected in the vertical direction.

10. A vehicle comprising a battery pack according to any one of claims 1 to 9.
